Europäisches Patentamt

European Patent Office

Office européen des brevets

(11) Publication number: **0 116 278**
**B1**

(12) **EUROPEAN PATENT SPECIFICATION**

(45) Date of publication of patent specification: **26.11.86**

(21) Application number: **84100155.5**

(22) Date of filing: **09.01.84**

(51) Int. Cl.⁴: **B 60 N 1/00**

(54) **Vehicle seat provided with a support frame of modular elements.**

(30) Priority: **18.01.83 IT 6704583**

(43) Date of publication of application:
**22.08.84 Bulletin 84/34**

(45) Publication of the grant of the patent:
**26.11.86 Bulletin 86/48**

(84) Designated Contracting States:
**DE FR GB SE**

(56) References cited:
**DE-A-2 705 465**
**DE-A-2 820 917**
**FR-A-1 321 511**
**FR-A-1 410 871**
**FR-A-2 241 426**
**FR-E- 88 284**
**GB-A-2 005 131**

(73) Proprietor: **FIAT AUTO S.p.A.**
**Corso Giovanni Agnelli 200**
**I-10135 Torino (IT)**

(72) Inventor: **Fantini, Marco**
**Corso Einaudi, 3**
**I-10100 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to a vehicle seat, in particular for a motor vehicle, of the type comprising a seat portion and a reclinable back portion which are formed by applying a covering to a support framework, which according to the invention is constructed from modular elements.

Basically, for each type of vehicle it is necessary to construct one or more seat models. The shape and size of the seat changes from one vehicle to another, and, according to the manner in which it is fitted-out, the same vehicle can be equipped with seat models which are similar in shape but of totally different performance, for example provided with a back portion and/or seat portion which are adjustable in inclination and height, a front seat back portion which can be lowered to allow access to the rear seats, etc. Moreover, on each vehicle model, the front seats (usually of chair type) and the rear seat (of bench type) have frameworks which are of entirely different construction.

Vehicle seats are formed by applying an upholstered covering (prepared from natural materials such as wool, fabric and leather, and/or artificial materials such as expanded polyurethane, synthetic foams, simulated leather etc.) to a support structure or framework of metal and possibly plastics construction, which gives the shape to the seat and which carries its control and movement members. Said frameworks comprise longitudinal members joined together by cross-members and provided with guides arranged to slide in rails which are fixed to the vehicle floor in such a manner as to enable the user to adjust the seat position. Longitudinal members and cross-members, of various shapes and sizes, are connected together in various numbers and manners in order to obtain different seat models.

For instance, FR—A—1.410.871 describes a vehicle seat comprising two tubular cross members for the seat portion and the back portion respectively, and two lateral juxtaposed plates provided with toothings; a frame with such a construction is clearly unable to allow seat of different shape and structure to be obtained with the same frame pieces; plates as those shown in FR—A—1.410.871 have to be, in fact, assembled in a single relative position only with respect to each other for working, so that in order to change the shape or operation of the seat it is necessary to change the shape and dimensions of the lateral plates. FR—A—2.241.426 also relates to a vehicle seat comprising two facing longitudinal members, each of which is formed by two vertical plates, and three cross-members, formed by two U-shaped tubes and by a further straight line tube, which connect the vertical plates of the two longitudinal members to each other. Also the construction shown by FR—A—2.241.426 present the drawback of the construction of the FR—A—1.410.871, because the two plates of each member, in order to place the control devices for moving the back portion, have to be juxtaposed in a precise position, and however does not allow the shape of the seat to be changed maintaining the same lateral plates. It is known, finally, a vehicle seat described in GB—A—2.005.131, the object of which is to allow a plurality of regulation devices to be placed on the seat in an economic and simple manner, without changing the main parts of the seat frame.

The seat of GB—A—2.005.131 comprises a square frame forming the seat portion and having two lateral opposite sections connected to each other by means of a front and a rear section, two lateral plates at which the lateral sections of the square frame are connected, and two channel sections at which an upper U-shaped tubular structure, forming the back portion, is pivoted. The described structure, owing to the sequence of three lateral elements (lateral sections of the square frame, lateral plates and lateral channel sections) articulated to each other, allows the regulating devices to be placed easily and in a different number, without changing the seat structure; nevertheless it is completely unable to allow the shape or dimension of the seat to be changed maintaining the same lateral elements, i.e. without changing neither the shape nor the dimensions of the lateral elements of the seat frame. In fact, in order to change the shape or dimensions of such a seat should be necessary to replace the entire square frame forming the seat portion (so that four elements of the seat, the two lateral sections of the frame and the front and rear section of the same, have to be substituted) and the channel sections, the latter being not rigidly connected to the upper tubular cross-element; moreover, it should be necessary to replace also the members which connect the channel sections with the lateral plates, the latter being not directly engaged by the channel section, as the couple of lateral plates of FR—A—1.410.871 or 2.241.426. Therefore the seat of GB—A—2.005.131 can be used on a single type of vehicle only, just as the other known seats.

It is apparent that such a situation leads to incomplete exploitation of possible economies in terms of mass production, and gives rise to high costs and production times, in particular for the most advanced seats provided with numerous adjustment systems, just as that of GB—A—2.005.131. This situation can also create difficulties in the purchasing of parts and in production organisation because of the low level (or non-existence) of standardisation of the various constructional elements of the various seat frames.

The object of the present invention is to provide a vehicle seat, in particular for a motor vehicle, which comprises a framework composed of only a few modular elements, of which some are suitable for any type of seat of any shape and size, and are suitable for any type of seat arrangement, whereas others, in particular the cross-members, are formed from just a few bent tubular elements, of which the shape and size can thus be simply and economically varied without substantially influencing the production cost and time.

A further object of the present invention is to provide a vehicle seat of simple and economical construction, of which the framework is suitable for use, in terms of its main parts, both for the front seats and for the rear seat, and which allows different seat arrangements to be obtained substantially without modification.

A further object of the invention is to provide a vehicle seat in which the user is able to automatically make all the positional adjustments of the seat by means of motors, i.e. adjustment of the seat position on the floor, adjustment of the inclination of the back portion, and adjustment of the height of the seat portion. The said objects are attained by a vehicle seat, in particular for a motor vehicle, of the type described in FR—A—2241426 or 1410871 comprising a support framework and an upholstered covering supported by said support framework, and arranged to define a seat portion and a back portion of said seat, said support framework comprising two facing lateral longitudinal members rigidly joined together by three cross-members, each of said longitudinal members comprising a first plate and a second plate parallel to the first both said plates being disposed vertically; and the first of said cross-members being constituted by a first U-shaped tube which is bent away from the plane in which it lies in such a manner as to assume an anatomical form and define the profile of said back portion of said seat, said first tube rigidly connecting together the respective upper ends of each of said second plates of said lateral longitudinal members; the second of said cross-members being constituted by a second U-shaped tube, which is bent away from the plane in which it lies in such a manner as to assume an anatomical form and define the front profile of said seat portion of said seat, said second tube rigidly connecting together the respective front ends of each of said first plates; and the third of said cross-members being constituted by a straight tube which rigidly connects together respective upper ends of said first plates, said seat being characterized according to the present invention in that each of said longitudinal members comprises in combination with said first and second plates and with said three cross-members a third plate parallel to the first, mounted with a first end on said upper end of said first plate and having a second end, namely that end distant from the first end, connected to a respective lower end of said second plate, said first plates being provided lowerly with guides which slidably engages a rail arranged for fixing to the floor of said vehicle.

The present invention will be more apparent from the non-limiting description given hereinafter of some embodiments thereof, with reference to the accompanying drawings in which:

Figure 1 is a lateral section through a vehicle seat constructed in accordance with the present invention, and from which the upholstery has been removed for reasons of clarity;

Figures 2 to 8 are sections to an enlarged scale on the lines II—II, III—III, IV—IV, V—V, VI—VI, VII—VII and VIII—VIII respectively through the seat of Figure 1;

Figures 9 and 10 show a detail of the seat of Figure 1 to an enlarged scale;

Figure 11 is a partly sectional plan view of the seat of Figure 1;

Figures 12 and 13 are a modification of a detail of the seat of Figure 1; and

Figures 14 and 15 are two respective modifications of a further detail of the seat of Figure 1.

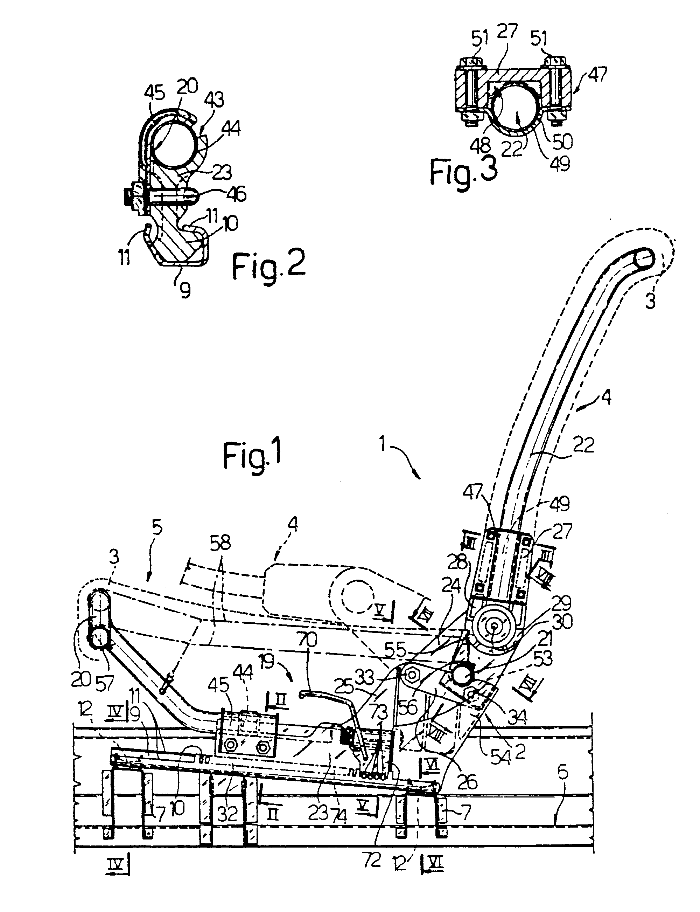

In Figures 1 to 11, the reference numeral 1 indicates overall a vehicle seat, in particular for a motor vehicle, comprising an articulated support framework 2 and an upholstered covering 3 (indicated by dashed lines) supported by the framework 2 and defining a back portion 4 and a seat portion 5 of the seat 1, which are arranged respectively to support the back and receive the loins of the user. In the illustrated non-limiting example, described hereinafter, the seat 1 is a front seat of chair type for a motor vehicle, not shown, and is mounted rigid with a floor 6 by brackets 7 and 8 fixed in any convenient manner to the floor 6 (for example welded), and supporting a pair of rails 9 which are slidably engaged by respective parallel straight guides 10 carried rigidly by the framework 2.

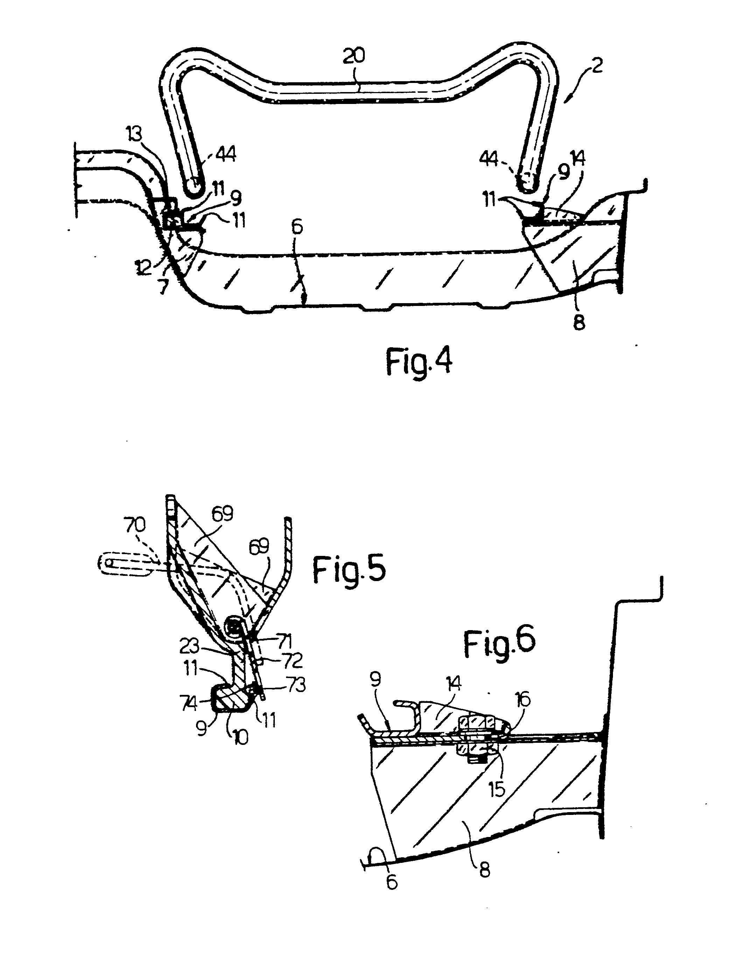

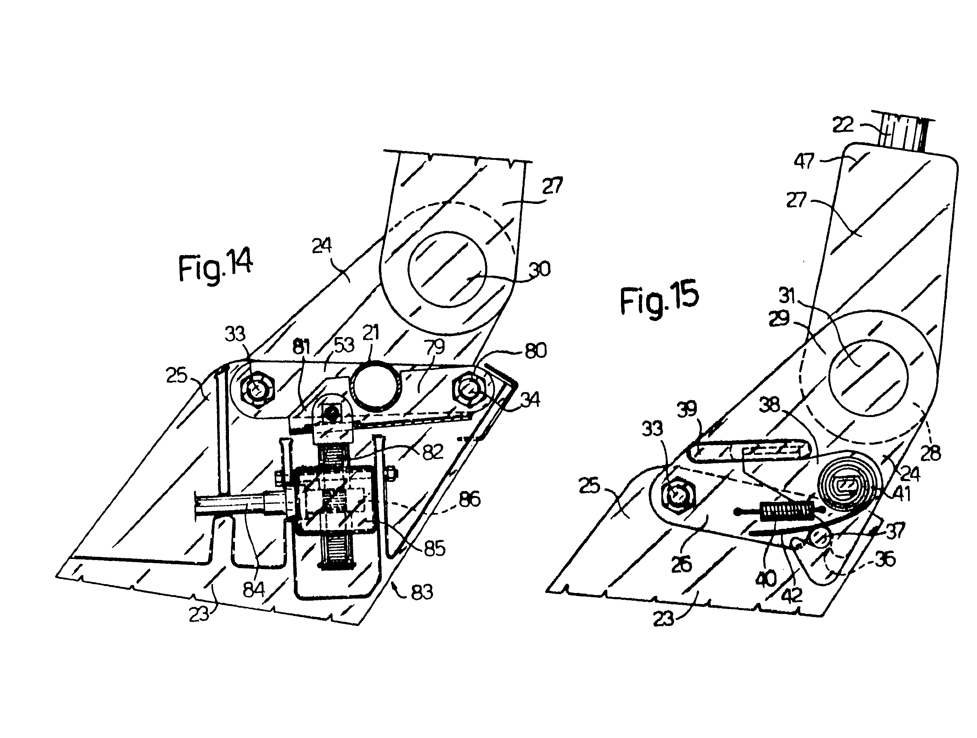

The rails 9 are provided with bent edges 11 arranged to prevent the escape of the guides 10 therefrom, so that the only movement which the guides 10 can undergo is sliding within the rails 9, the seat 1 being thus slidably constrained to the floor 6. One of the rails 9 is fixed to the brackets 7, on which it rests by way of respective lateral appendices 12 (Figure 9) arranged for insertion into respective seats 13 provided in said brackets 7, while the other (Figure 6) is fixed to the brackets 8, on which it rests by way of appendices 14 which are parallel and opposite the appendices 12 and are engaged by a bolt or other removable connection element 15, which is screwed into a suitable bore 16 of the brackets 8. The bolt 15 also prevents the escape of the appendices 12 from the seats 13, to ensure secure fixing of the seat 1 to the floor by means of said appendices 12. This fixing system for the rails 9 also enables the unit constituted by the seat 1 provided with the rails 9 to be automatically mounted on the floor 6. One of the rails 9 is also provided with a connection element 18 (Figure 10) for a safety belt, not shown, for the seat 1. The element 18 is fixed to the rail 9 at one of the appendices 12. The framework 2 comprises two facing lateral longitudinal members 19 joined rigidly together by three cross-members constituted by metal tubes 20, 21 and 22. Each longitudinal member 19 comprises a L-shaped plate 23 disposed vertically and provided lowerly with one of the guides 10 which engage the rails 9, a second flat plate 24 of substantially triangular shape with rounded vertices and parallel to the plate 23, and mounted on the rear upper end 25 of this latter at its own end 26 as defined by two of its three vertices, and a third plate 27 parallel to the plates 23 and 24 and mounted above the plate 24, and connected by its lower end 28 to a second end 29 of the plate 24, namely that end distant from the end 26.

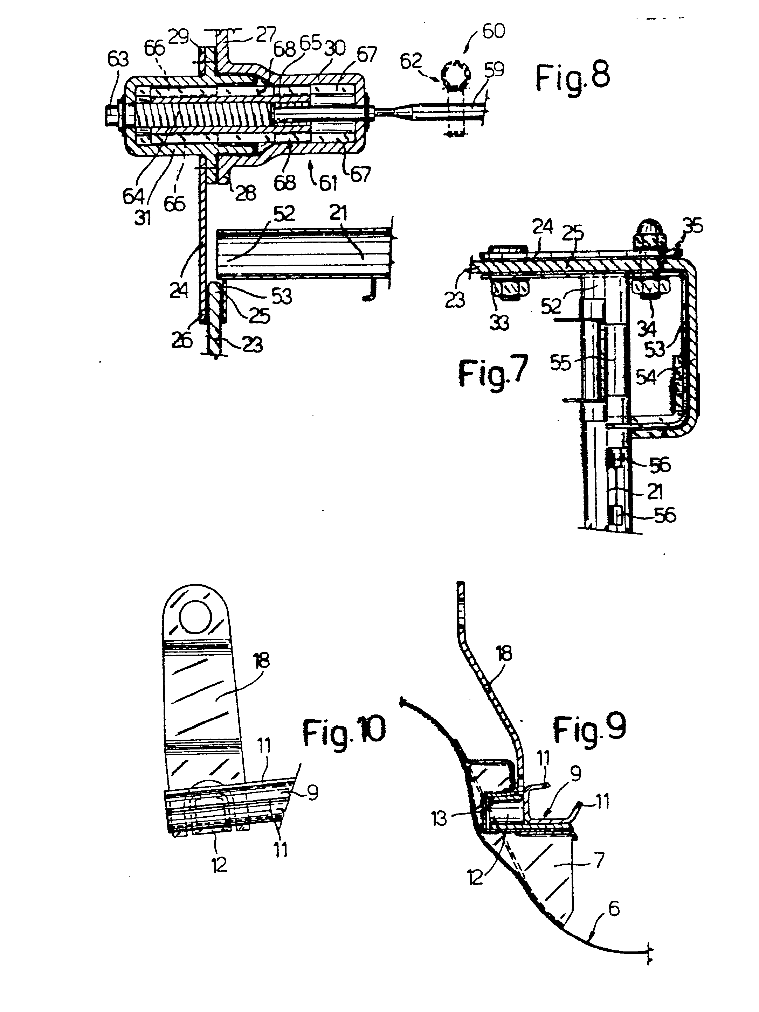

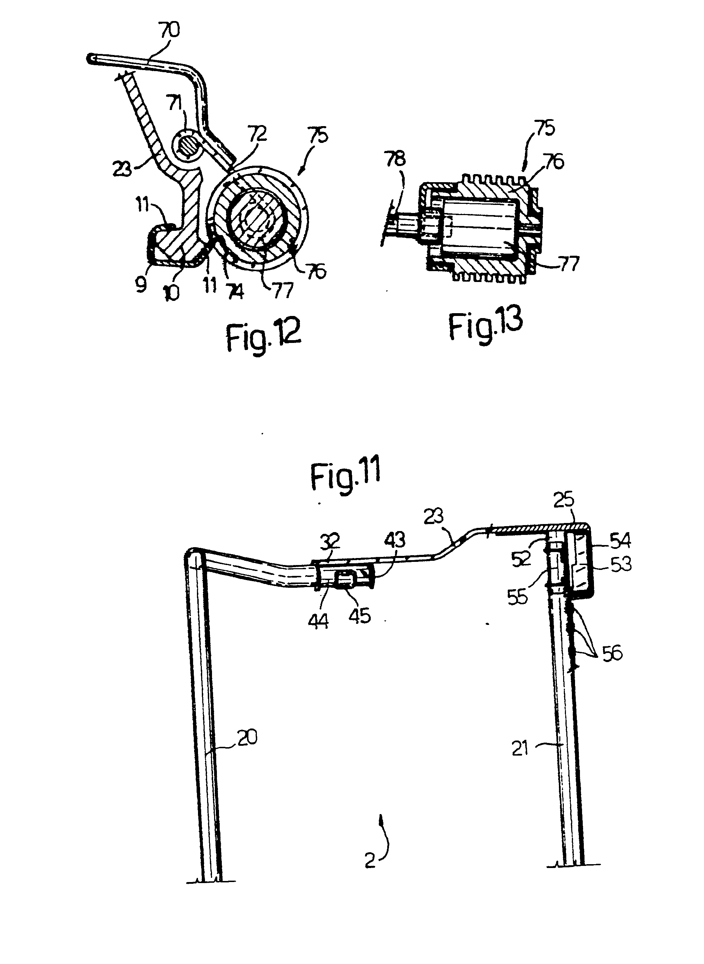

In the illustrated example, the seat 1 is of the type in which the inclination of the back portion 4 can be adjusted to that the user is able to vary the angle which this forms with the seat portion 5. Consequently, the end 28 of the plate 27 is connected to the end 29 of the plate 24 in a rotatable manner by means of a first substantially cylindrical sleeve element 30 angularly rigid with the plate 27 (in the example illustrated in Figure 8, the sleeve 30 is in one piece with the plate 27), to which it is perpendicular, said sleeve 30 being idly mounted coaxial to a second sleeve element 31 fixed angularly rigid with the plate 24 in any convenient manner, for example by screws, not shown. If the back portion 4 is not to be adjustable, it is necessary only to dispense with the sleeve 31 and directly fix the plate 27 to the plate 24 without the need for any modification thereto.

The end 25 of the plate 23 is connected to the end 26 of the plate 24 by two constraints which are offset by a predetermined distance and are disposed at the vertices of the end 26 of the plate 24. A first constraint disposed on that vertex of the end 26 which faces the front end 32 of the plate 23 is constituted by a connection element 33 (a bolt in the illustrated example) arranged to allow only the free rotation of the plates 24 about it parallel to the plate 23, and thus forming a hinge between the plates 23 and 24. The second constraint, disposed on the opposite vertex of the end 26, is constituted by a bolt 34 (see Figures 1 and 7) parallel to the cross-member or tube 21 and engaging coaxial bores 36 of the plates 23 and 24, thus preventing any rotation of the plate 24 about the element 33 and therefore rigidly fixing this latter, together with said element 33, to the plate 23.

With particular reference to Figures 1, 4, 7 and 11, the tubes or cross-members 20, 21 and 22 are of steel construction, whereas the plates 23, 24 and 27 are preferably constructed of a suitably moulded synthetic plastics resin and are provided with stiffening ribs. The tube 20 is of U-shape, and is bent away from the plane in which it lies, as shown in Figure 4, in such a manner as to assume an anatomical form and define the front profile of the seat portion 5. It rigidly connects together the front ends 32 of the plates 23, which are provided with seats 43 for housing the opposite ends 44 of the tube 20, which are locked in the seats 43 by metal pressure elements constituted by metal jaws 45 fixed to the plates 23 by means of U-shaped bolts 46, in the manner shown in Figure 2. Likewise, the tube 22 is of U-shape and is bent away from the plane in which it lies in such a manner as to assume an anatomical form and, as shown in Figure 1, define the profile of the back portion 4. The tube 22 rigidly connects together the respective upper ends 47 of the plates 27, which are of cheek shape and carry seats 48 for housing the opposite ends 49 of the tube 22, these being locked by metal cheek-shaped jaws 50, which face the plates 27 and are fixed to the inside (i.e. that facing the opposing longitudinal member 19) thereof by means of screws 51.

In contrast, the cross-member or tube 21 is straight and perpendicular to the plates 23, and rigidly connects together the upper ends 25 of these latter. Specifically, the opposing ends 52 of the tube 21 are angularly rigid (for example welded) with respective U-shaped metal plates 53 mounted rigidly on the ends 25 by the same bolts which fix the plate 24. As can be seen in Figures 1 and 7, the ends 25 are provided with U-shaped inner rear ribs 54 which partly support the plates 53. The tube 21 is also mounted on the ends 52 of respective hook brackets 55, and carries over its entire length a plurality of welded hooks 56. Likewise, the tube 20 is also provided with hooks 57 facing the hooks 56. Between the tubes 20 and 21 there is stretched a flat element 58 constructed of elastically deformable fabric and fixed to the hooks 56, 57 and to the brackets 55 in such a manner as to assume an anatomical form and define together with the tube 20 the profile of the seat portion 5. Finally, in order to ensure rigidity of the back portion 4, the plates 24 are preferably connected together by a tie rod 59 parallel to the tube 21.

In the particular example illustrated, the tie rod 59 forms part of a device 60 for adjusting the angular position of the back portion 4 relative to the seat portion 5, and comprising two equal actuator devices 61 each contained in the sleeves 30 and 31 of each pair of mutually rotatable plates 24 and 27. The devices 61 are operated by rotating the tie rod 59, which is controlled by a motor, not shown, by way of a transmission coupling 62 (Figure 8), and can be operated by the user by known control means, not shown (for example a switch). The tie rod 59 is supported at its ends 63 by the sleeves 31 with which it is coaxial, and is provided at its ends 63 with two threaded portions 64. Each device 61 comprises an actuator element 65 arranged to cooperate with a respective portion 64 in such a manner as to be moved parallel to its own axis by the rotation of the tie rod 59, guide means constituted by straight teeth 66 formed on the inside of the sleeve 31 in one piece therewith, and arranged to engage slots in the element 65 in order to make it angularly rigid with the sleeve 31 and with the plate 24, and helical teeth 67 angularly rigid with the sleeve 30 and arranged to cooperate with helical surfaces 68 on slots of the element 65 in such a manner as to receive from the surfaces 68, following the translatory movement of the element 65, a thrust which causes the sleeve 30 rotate on the sleeve 31, and consequently to move the back portion 4. The guides 10 are of plastics construction, and are formed in one piece with the plates 23. Below the end 25, one of these (Figures 1 and 5) is provided with stiffening and strengthening ribs 69, and has hinged thereto a lateral lever 70 which can be controlled by the user of the seat 1, and is able to rotate in a plane perpendicular to the guides 10 against the action of a spring 71. A lower end 72 of the lever 7 is fitted with teeth 73 arranged to engage a plurality of slots 74 formed at a determined constant pitch in the corresponding rail 9 in which the guide 10 of the plate 23 carrying the lever 70 slides. The teeth 73 are arranged to cooperate with the slots 74 in order to halt the sliding of the guides 10 in the rails 9 in a plurality of determined positions, so as to adjust the position of the seat 1 on the floor 6.

In a modified embodiment shown in Figure 15 and relating to a seat 1 which is entirely identical to that of Figure 1, but in which the back portion 4 must be able to be lowered against the seat portion 5 (to allow access to the rear vehicle seats when rear doors are lacking), the plates 24 of the longitudinal members 19 are fixed to the plates 23 in a rotatable manner by means of the constraining element 33, and at least one plate 24 is provided, at that vertex of the end 26 which is distant from the corresponding element 33, with a cut-away portion 36 to prevent interference between the plate 24, during movement, and a pin 37 parallel to the element 33 and rigid with the end 25 of the corresponding plate 23, said pin 37 being arranged to act as a limit stop for the plate 24 and to support this latter and the back portion 4 when this latter is in its raised position (position shown in Figure 1). The plate 24 rigidly carries a hook 38, arranged to engage the pin 37 in order to prevent any rotation of the plate 24 relative to the plate 23 about the element 33, and which is mobile by means of a push-button 37 operable by the user against the action of a spring 40 in order to disengage the pin 37 and thus allow free rotation of the plate 24. This rotation towards the lowered position of the back portion 4 (shown by dashed and dotted lines in Figure 1) is induced automatically, on releasing the hook 38 from the pin 37, by elastic means constituted by a spiral spring 41 carried by the plate 24 coaxially with the point of constraint of the hook 38 and arranged to cooperate at one of its ends 42 with the pin 37 in such a manner as to press against this latter and to urge the plate 24 to rotate towards the seat portion 5 by elastic reaction.

A further embodiment of the seat 1 described and illustrated in Figure 1 is shown in Figures 12 and 13. This embodiment relates to the mounting on the seat 1 of a device 75 for automatically moving the seat along the rails 9. In this case, the end 72 of the lever 70, which is mounted in an identical manner to that shown in Figure 5, is fitted not with the teeth 73 but with the device 75, which comprises a worm 76 rotatably supported on the end 72, and a reduction gear 77 housed inside the plastics worm 76 and arranged to be driven by way of a flexible cable 78 from an electric motor, not shown, which can be controlled by the user, for example by means of a switch. The reduction gear 77 is arranged to rotate the worm 76, and this latter is arranged to engage the plurality of slots 74 of the rail 9, which then acts as a rack, to cause the guides 10 to slide in the rails 9 following rotation of the worm 76. Should the drive motor of the worm 76 fail, it is possible to manually slide the guides 10 by disengaging the worm 76 from the slots 74 by rotating the lever 70. When the worm 76 is at rest, it keeps the guides 10 locked in the rails 9 in the required position.

A final modified embodiment is shown in Figure 14 and relates to a particular system for mounting the tube 21 when the seat portion 5 of the described seat 1 is to be made adjustable in height and inclination. In this case, the tube 21 is fixed at its ends 52 to a plate 79 mounted parallel to the plate 53, there being no modifications other than the manner of releasing the tube 21. One end 80 of the plate 79 is hinged to the end 25 of the plate 23 by the same bolt 34 (or by the pin 37, if the modification of Figure 14 is made to the seat 1 together with that of Figure 15), so as to be able to rotate parallel to the plate 23, whereas another of its ends 81, namely that distant from the end 80, is hinged to a substantially vertical rod 82 forming part of a device 83 for adjusting the height of the seat 5, and comprising, in addition to the rod 82, which is slidably supported by the plate 23, an electric motor, not shown, which can be controlled by the user and which by means of a flexible cable 84 drives a reduction unit 85 supported by the plates 23 and provided with transmission means 86 arranged to cooperate with the rod 82 in order to move it parallel to its own axis. In this manner, the rod 82 causes the plate 79, and thus the tube 21, to rotate about the axis of the bolt 34, and consequently the tube 21 moves along a circular arc to modify its height from the floor 6 (either rising or lowering), so as to produce a change in the position of the seat portion 5, which because of the element 58 is elastic and deformable, thus resulting in a change in the position of the user sitting on the seat 1.

The advantages of the present invention are apparent from the aforegoing description. In particular, the seats formed in accordance with the invention comprise a framework composed of just a few unit elements which means that different seat arrangements can be obtained substantially without modifications, and that numerous automatic seat position adjustment devices can be accepted. Rear bench-type seats can be formed using the same framework as the front seats, and replacing the tubes 20, 21 and 22 by others of equal diameter but greater length, substantially without increasing costs. By merely changing the dimensions of the tubes 20, 21 and 22 (and possibly the connecton points of the plates 23, 24 and 27) it is also possible to obtain seats of different types for different vehicles, substantially without additional costs.

### Claims

1. A vehicle seat (1), in particular for a motor vehicle, of the type comprising a support framework (2) and an upholstered covering (3) supported by said support framework (2), and arranged to define a seat portion (5) and a back portion (4) of said seat (1), said support framework (2) comprising two facing lateral longitudinal members (19) rigidly joined together by three cross-members (20, 21, 22), each of said longitudinal members (19) comprising a first plate (23) and a second plate (27) parallel to the first, both said plates (23, 27) being disposed vertically; and the first of said cross-members (20, 21, 22) being constituted by a first U-shaped tube (22) which is bent away from the plane in which it lies in such a manner as to assume an anatomical form and define the profile of said back portion (4) of said seat (1), said first tube (22) rigidly connecting together the respective upper ends (47) of each of said second plates (27) of said lateral longitudinal members (19); the second of said cross-members being constituted by a second U-shaped tube (20), which is bent away from the plane in which it lies in such a manner as to assume an anatomical form and define the front profile of said seat portion (5) of said seat (1), said second tube (20) rigidly connecting together the respective front ends (32) of each of said first plates (23); and the third of said cross-members being constituted by a straight tube (21) which rigidly connects together respective upper ends (25) of said first plates (23), said seat (1) being characterized in that each of said longitudinal members (19) comprises a combination with said first and second plates (23, 27) and with said three cross-members (20, 21, 22) a third plate (24) parallel to the first, mounted with a first end (26) on said upper end (25) of said first plate (23) and having a second end (29), namely that end distant from the first end (26), connected to a respective lower end (28) of said second plate (27), said first plate being provided lowerly with guides (10) which slidably engages a rail (9) arranged for fixing to the floor (6) of said vehicle.

2. A seat as claimed in claim 1, characterised in that the profile of said seat portion (5) is defined by said second U-shaped tube (20) and by a flat horizontal element (58) in the form of elastically deformable fabric stretched between said second U-shaped tube (20) and said straight tube (21) and connected to both by means of a plurality of hooks (55, 56, 57).

3. A seat as claimed in claim 1 or 2, characterised in that said lower end (28) of said second plate (27) is connected to said second end (29) of said third plate (24) in a rotatable manner by means of a first sleeve element (30) angularly ridig with said third plate (27) and perpendicular thereto, and mounted idly and coaxially on a second sleeve element (31) which is angularly rigid with said third plate (24).

4. A seat as claimed in any one of the preceding claims, characterised in that said first end (26) of said third plate (24) and said upper end (25) of said first plate (23) are connected together by two constraints which are offset by a predetermined distance, a first constraint being disposed on the side facing said front end (32) of said first plate (23) and being constituted by a connection element (33) arranged to allow said third plate (24) to rotate about it parallel to said first plate (23), and the second constraint being constituted by means (34, 37, 38) for preventing rotation of said third plate (24) about the first constraint.

5. A seat as claimed in one of the preceding claims, characterised in that said third plates (24) are connected together by a tie rod (59) parallel to said straight tube (21).

6. A seat as claimed in one of claims 3 to 5, characterised by comprising a device (60) for adjusting the angular position of said back portion (4) relative to said seat portion (5), said adjustment device (60) comprising two actuator devices (61) each contained in said first and said second sleeve element (30, 31) of each of said third and second plates (24, 27) and being operable by the user by control means.

7. A seat as claimed in claim 6, characterised in that said second sleeve elements (31) rigid with said third plates (24) support the opposing ends (63) of a tie rod (59) parallel to said straight tube (21) and coaxial to said elements (31), each end (63) comprising a threaded portion (64), each said actuator device (61) comprising an actuator element (65) arranged to cooperate with one of said threaded portions (64) in order to be subjected to translatory motion parallel to its axis by the rotation of said tie rod (59), of guide means (66) for making said actuator element (65) angularly rigid with said second sleeve element (31), and of means (67) angularly rigid with said first sleeve element (36) and arranged to cooperate with helical surfaces (68) of said actuator element (65) in order to receive from said surfaces a thrust which causes the first sleeve element (30) to rotate on the second (31).

8. A seat as claimed in claim 7 and dependent on claim 6, characterised in that said control means comprise an electric motor for rotating said tie rod (89).

9. A seat as claimed in one of claims 4 to 8, characterised in that said means for preventing rotation of said third plate (24) relative to the first (23) about said first constraint (33) comprise a bolt (34) parallel to said straight tube (21) and engaging coaxial bores (35) of said first and said third plate (23, 24).

10. A seat as claimed in one of claims 4 to 8, characterised in that said means for preventing rotation of said third plate (24) relative to the first (23) about said first constraint (33) comprise a pin (37) parallel to said straight tube (21) and rigid with said upper end (25) of at least one of said first plates (23), and a hook (38) which is rigid with the respective third plate (24) and arranged to engage said pin (37), and is mobile by means of a push-button (39) against the action of a spring (40) in order to disengage said pin (38); elastic means (41) being carried by said third plates (24) and being arranged to cooperate with said pin (37) in order to cause said third plate (24) to rotate about the first constraint (33) in such a manner as to lower said back portion (4) against said seat portion (5).

11. A seat as claimed in any one of the preceding claims, characterised in that said straight tube (21) is supported at each end (52) by a plate (53, 79) mounted rigid with said upper end (25) of said first plate (23) of each of said lateral longitudinal members (19).

12. A seat as claimed in claim 11, characterised in that said plate (79) comprises a first end (80) hinged to said first plate (23) in such a manner that said plate (79) can rotate parallel to this latter, and a second end (81), namely that opposite the first (80), hinged to a substantially vertical rod (82) of a device (83) for adjusting the height of said seat portion (5) of said seat (1), said device (83) further comprising an electric motor which can be controlled by the user and is arranged to drive, by means of a flexible cable (84), a reduction gear unit (85) supported by said plate (23) and provided with dragging means (86) arranged to cooperate with said rod (82) in order to move it parallel to its axis, the rod (82) being supported by said first plate (23).

13. A seat as claimed in any one of the preceding claims, characterised in that the rails (9) in which said guides (10) slide and which are each carried by one of said first plates (23) are arranged to rest on support brackets (7, 8) rigid with said floor (6) of said vehicle, one of said rails (9) being provided with at least one first lateral appendix (12) arranged to cooperate by insertion with a seat (13) provided in one (7) of said brackets in order to constrain said seat (1) to said floor (6), the other rail (9) being provided with at least one second lateral appendix (14), which is opposite the first (12) and is arranged for engagement, together with another (8) of said brackets, by a removable connection member (15) arranged to prevent the emergence of said first appendix (12) from said seat (13) and to fix to said floor (6) the rail (8) provided with said second appendix (14).

14. A seat as claimed in claim 13, characterised in that one of said rails (9) is provided with a connection element (18) for a safety belt for said seat (1), said connection element (18) being fixed in a position corresponding with said first appendix (12).

15. A seat as claimed in one of the preceding claims, characterised in that one of said first plates (23) is provided with a lateral lever (70) which can be controlled by the user and is able to rotate against the action of elastic means (71), and which is provided at its lower end (72) with engagement means (73, 75) arranged to cooperate with a plurality of slots (74) formed at a constant determined pitch in the respective rail (9) in which the guide (10) carried by said first plate (23) slides, in order to halt the sliding of the guides (10) in the respective rails (9) in a plurality of predetermined positions.

16. A seat as claimed in claim 15, characterised in that said engagement means (75) comprise a worm (76) rotatably supported by said lower end (72) of said lever (70), and a reduction gear (77) for rotating said worm (76) and housed inside this latter, and arranged to receive motion, by way of a flexible cable (78), from an electric motor which can be controlled by the user; said worm (76) being arranged to engage said slots (74) and to cooperate therewith in order to cause said guides (10) to slide in said rails (9) as a result of the rotation of said worm (76).

17. A seat as claimed in one of the preceding claims, characterised in that said first (23), said third (24) and said second (27) plate are of plastics construction and are provided with stiffening ribs (69); said first (22) and said second (20) U-shaped tube being of metal construction and fixed to said second (27) and said first (23) plate of each of said longitudinal members (19) by means of metal pressure elements (45, 50) mounted on said first and second plates (23, 27) by means of screws (46, 51), and arranged to lock the respective ends (49, 44) of said first (22) and said second (20) U-shaped tube in respective seats (48, 43) provided in said first (23) and said second (27) plates.

## Patentansprüche

1. Fahrzeugsitz (1), insbesondere für ein Motorfahrzeug, mit einem Abstützrahmenwerk (2) und einem gepolsterten Bezug (3), der durch das Abstützrahmenwerk (2) abgestützt wird, welcher Sitz so ausgebildet ist, daß er einen Sitzteil (5) und einen Lehnenteil (4) des Sitzes (1) definiert, wobei das Abstützrahmenwerk (2) zwei einander zugewandte seitliche fest miteinander durch drei Querteile (20, 21, 22) verbundene Längsteile (19) aufweist, wobei jedes Längsteil (19) eine erste Platte (23) und parallel zur ersten eine zweite Platte (27) aufweist, wobei beide Platten (23, 27) vertikal angeordnet sind; wobei das erste der Querteile (20, 21, 22) durch ein erstes U-förmiges Rohr (22) gebildet wird, das aus der Ebene, in der es liegt, herausgebogen ist, derart, daß es eine anatomische Form annimmt und das Profil des Lehnenteils (4) des Sitzes (1) definiert, wobei das erste Rohr (22) die oberen Enden (47) jeder der zweiten Platten (27) der seitlichen Längsteile (19) fest miteinander verbindet; wobei das zweite der Querteile durch ein zweites U-förmiges Rohr (20) gebildet wird, das aus der Ebene, in der es liegt, in der Weise herausgebogen ist, daß es eine anatomische Form annimmt und das Vorderprofil des Sitzteils (5) des Sitzes (1) definiert, wobei das zweite Rohr (20) die vorderen Enden (32) jeder der ersten Platten (23) fest miteinander verbindet; und wobei das dritte der Querteile durch ein gerades Rohr (21) gebildet wird, das obere Enden (25) der ersten Platten (23) fest miteinander verbindet, dadurch gekennzeichnet, daß jedes der Längsteile (19) in Kombination mit den ersten und zweiten Platten (23, 27) und mit den drei Querteilen (20, 21, 22) eine dritte Platte (24) parallel zur ersten aufweist, die mit einem ersten Ende (26) an dem oberen Ende (25) der ersten Platte (23) montiert ist und ein zweites Ende (29) hat, nämlich das vom ersten Ende (26) entfernt liegende Ende, das mit einem zugeordneten unteren Ende (28) der zweiten Platte (27) verbunden ist, wobei die erste Platte unten mit Führungen (10) versehen ist, die gleitend mit einer Schiene (9) in Eingriff ist, die zum Befestigen am Boden (6) des Farhzeugs ausgebildet ist.

2. Sitz nach Anspruch 1, dadurch gekennzeichnet, daß das Profil des Sitzteils (5) durch das zweite U-förmige Rohr (20) und durch ein flaches horizontales Element (58) in Form von elastisch verformbarem Stoff, das zwischen dem zweiten U-förmigen Rohr (20) und dem geraden Rohr (21) gespannt ist und mit beiden durch eine Mehrzahl von Haken (55, 56, 57) verbunden ist, definiert wird.

3. Sitz nach Anspruch 1 oder 2, dadurch gekennzeichnet, daß das untere Ende (28) der zweiten Platte (27) mit dem zweiten Ende (29) der dritten Platte (24) drehbar verbunden ist durch ein erstes Hülsenelement (30), das mit der dritten Platte (27) winkelfest und rechtwinklig zu dieser ist und frei drehbar und achsgleich auf einem zweiten Hülsenelement (31) montiert ist, das mit der dritten Platte (24) winkelfest ist.

4. Sitz nach einem der vorhergehenden Ansprüche, dadurch gekennzeichnet, daß das erste Ende (26) der dritten Platte (24) und das obere Ende (25) der ersten Platte (23) durch zwei Einspannungen miteinander verbunden sind, die mit einem vorbestimmten Abstand gegeneinander versetzt sind, wobei eine erste Einspannung auf der dem vorderen Ende (32) der ersten Platte (23) zugewandten Seite angeordnet ist und durch ein Verbindungselement (33) gebildet wird, das so ausgebildet ist, daß es der dritten Platte (24) gestattet, parallel zur ersten Platte (23) um es zu drehen, und die zweite Einspannung durch Mittel (34, 37, 38) zum Verhindern einer Drehung der dritten Platte (24) um die erste Einspannung gebildet wird.

5. Sitz nach einem der vorhergehenden Ansprüche, dadurch gekennzeichnet, daß die dritten Platten (24) miteinander durch eine zu dem geraden Rohr (21) parallele Verbindungsstange (59) verbunden sind.

6. Sitz nach einem der Ansprüche 3 bis 5, dadurch gekennzeichnet, daß er eine Vorrichtung (60) zum Einstellen der Winkellage des Lehnenteils (4) relativ zu dem Sitzteil (5) aufweist, wobei die Einstellvorrichtung (60) zwei Betätigungsvorrichtungen (61) aufweist, deren jede in dem ersten und dem zweiten Hülsenelement (30, 31) jeder der dritten und zweiten Platten (24, 27) enthalten ist und vom Benutzer durch Steuermittel betätigbar ist.

7. Sitz nach Anspruch 6, dadurch gekennzeichnet, daß die mit den dritten Platten (24) fest verbundenen zweiten Hülsenelemente (31) die einander abgewandten Enden (63) von einer zu dem geraden Rohr (21) parallelen und mit den Elementen (31) gleichachsigen Verbindungsstange (59), wobei jedes Ende (63) einen Gewindeteil (64) aufweist, und wobei jede Betätigungsvorrichtung (61) ein Betätigungselement (65) aufweist, das so angeordnet ist, daß es mit einem der Gewindeteile (64) zusammenarbeitet, um durch Drehung der Verbindungsstange (59) einer Translationsbewegung parallel zu seiner Achse unterworfen zu werden, von Führungsmitteln (66), um das Betätigungselement (65) winkelfest mit dem zweiten Hülsenelement (31) zu machen, und von Mitteln (67) halten, die mit dem ersten Hülsenelement (36) winkelfest sind und so ausgebildet sind, daß sie mit Schraubenflächen (68) des Betätigungselements (65) zusammenwirken, um von den genannten Flächen einen Schub zu erhalten, der bewirkt, daß das erste Hülsenelement (30) sich auf dem zweiten (31) dreht.

8. Sitz nach Anspruch 7, und abhängig von Anspruch 6, dadurch gekennzeichnet, daß die Steuermittel einen Elektromotor zum Drehen der Verbindungsstange (89) aufweisen.

9. Sitz nach einem der Ansprüche 4 bis 8, dadurch gekennzeichnet, daß die Mittel zum Verhindern einer Drehung der dritten Platte (24) relativ zur ersten (23) um die erste Einspannung (33) einen Bolzen (34) aufweisen, der parallel zu dem geraden Rohr (21) ist und mit gleichachsigen Bohrungen (35) der ersten und zweiten Platte (23, 24) in Eingriff ist.

10. Sitz nach einem der Ansprüche 4 bis 8, dadurch gekennzeichnet, daß die Mittel zum Verhindern einer Drehung der dritten Platte (24) relativ zur ersten (23) um die erste Einspannung (33) einen Stift (37), der parallel zu dem geraden Rohr (21) ist und fest mit dem oberen Ende (25) von mindestens einer der ersten Platten (23) verbunden ist, und einen Haken (38) aufweisen, der mit der zugeordneten dritten Platte (24) fest verbunden ist und so angeordnet ist, daß er mit dem Stift (37) in Eingriff ist, und der mittels eines Druckknopfes (39) gegen die Kraft einer Feder (40) beweglich ist, um außer Eingriff mit dem Stift (38) zu kommen; daß elastische Mittel (41) von den dritten Platten (24) getragen werden und so angeordnet sind, daß sie mit dem Stift (37) zusammenarbeiten, um eine Drehung der dritten Platte (24) um die erste Einspannung (33) zu bewirken, derart, daß der Lehnenteil (4) gegen den Sitzteil (5) abgesenkt wird.

11. Sitz nach einem der vorhergehenden Ansprüche, dadurch gekennzeichnet, daß das gerade Rohr (21) an jedem Ende (52) durch eine Platte (53, 79) gehalten wird, die fest am oberen Ende (25) der ersten Platte (23) jedes der seitlichen Längsteile (19) angebracht ist.

12. Sitz nach Anspruch 11, dadurch gekennzeichnet, daß die Platte (79) ein erstes Ende (80), das an der ersten Platte (23) in der Weise gelenkig gelagert ist, daß sich die Platte (79) parallel zu der letzteren drehen kann, und ein zweites Ende (81) aufweist, nämlich das dem ersten (80) abgewandte Ende, das an einer im wesentlichen vertikalen Stange (82) einer Vorrichtung (83) zum Einstellen der Höhe des Sitzteils (5) des Sitzes (1) gelenkig gelagert ist, wobei die Vorrichtung (83) weiterhin einen Elektromotor aufweist, der vom Benutzer betätigt werden kann und derart angeordnet ist, daß er mittels eines flexiblen Kabels (84) ein Untersetzungsgetriebe (85) antreibt, das von der Platte (23) gehalten wird und mit einer Zugvorrichtung (86) versehen ist, die so angeordnet ist, daß sie mit der Stange (82) zusammenarbeitet, um sie parallel zu ihrer Achse zu bewegen, wobei die Stange (82) durch die erste Platte (23) gehalten wird.

13. Sitz nach einem der vorhergehenden Ansprüche, dadurch gekennzeichnet, daß die Schienen (9), in denen die Führungen (10) gleiten und deren jede durch eine der ersten Platten (23) getragen wird, so angeordnet sind, daß sie auf am Boden (6) des Fahrzeugs festen Stützen (7, 8) ruhen, wobei eine der Schienen (9) mit mindestens einem ersten seitlichen Fortsatz (12) versehen ist, der so angeordnet ist, daß er durch ein Einsetzen mit einem in einer (7) der Stützen vorgesehenen Sitz (13) zusammenwirkt, um den Sitz (1) an dem Boden (6) zu befestigen, wobei die andere Schiene (9) mit mindestens einem zweiten seitlichen Fortsatz (14) versehen ist, der dem ersten (12) gegenübersteht und, gemeinsam mit einer anderen (8) der Stützen, zum Eingriff eines entfernbaren Verbindungsteils (15) ausgebildet ist, das so angeordnet ist, daß es das Herausgleiten des ersten Fortsatzes (12) aus dem Sitz (13) verhindert und die mit dem zweiten Fortsatz (14) versehene Schiene (8) an dem Boden (6) fixiert.

14. Sitz nach Anspruch 13, dadurch gekennzeichnet, daß eine der Schienen (9) mit einem Verbindungselement (18) für einen Sicherheitsgurt für den Sitz (1) versehen ist, wobei das Verbindungselement (18) in einer dem ersten Fortsatz (12) entsprechenden Position fixiert ist.

15. Sitz nach einem der vorhergehenden Ansprüche, dadurch gekennzeichnet, daß eine der ersten Platten (23) mit einem seitlichen Hebel (70) versehen ist, der durch den Benutzer betätigt werden kann und sich gegen die Wirkung einer elastischen Einrichtung (71) drehen kann, und der an seinem unteren Ende (72) mit Eingriffsmitteln (73, 75) versehen ist, die so angeordnet sind, daß sie mit einer Mehrzahl von Schlitzen (74) zusammenwirken, die mit einer konstanten bestimmten Teilung in der entsprechenden Schiene (9) gebildet sind, in der die von der ersten Platte (23) getragene Führung (10) gleitet, um die Gleitbewegung der Führungen (10) in den entsprechenden Schienen (9) in einer Mehrzahl von vorbestimmten Stellungen anzuhalten.

16. Sitz nach Anspruch 15, dadurch gekennzeichnet, daß die Eingriffsmittel (75) eine von dem unteren Ende (72) des Hebels (70) drehbar gehaltene Schnecke (76) und ein Untersetzungsgetriebe (77) zum Drehen der Schnecke (26) aufweisen, das innerhalb der letzteren untergebracht ist und derart angeordnet ist, daß es mittels eines flexiblen Kabels (78) von einem Elektromotor bewegt wird, der vom Benutzer gesteuert werden kann; wobei die Schnecke (76) derart angeordnet ist, daß sie in die Schlitze (74) eingreifgt und mit diesen zusammenarbeitet, um die Führungen (10) in den Schienen (9) als Ergebnis der Drehung der Schnecke (76) gleiten zu lassen.

17. Sitz nach einem der vorhergehenden Ansprüche, dadurch gekennzeichnet, daß die erste (23), die dritte (24) und die zweite (27) Platte aus Kunststoff hergestellt sind und mit Versteifungsrippen (69) versehen sind; daß das erste (22) und das zweite (20) U-förmige Rohr aus Metall hergestellt sind und an der zweiten (27) und der ersten (23) Platte jedes der Längsteile (19) mittels Metalldruckelementen (45, 50) befestigt sind, die an den ersten und zweiten Platten (23, 27) mit Hilfe von Schrauben (46, 51) befestigt sind, und die derart angeordnet sind, daß sie die entsprechenden Enden (49, 44) des ersten (22) und des zweiten (20) U-förmigen Rohrs in zugeordneten Sitzen (48, 43) festlegen, die in den ersten (23) und den zweiten (27) Platten vorgesehen sind.

**Revendications**

1. Siège de véhicule (1), notamment pour un véhicule à moteur, du type comprenant une ossature support (2) et un revêtement rembourré (3) supporté par cette ossature (2) et disposé pour définir une portion d'assise (5) et une portion de dossier (4) de ce siège (1), l'ossature support (2) comprenant deux éléments longitudinaux latéraux en vis-à-vis (19) solidarisés l'un de l'autre par trois éléments transversaux (20, 21, 22), chaque élément longitudinal (19) comprenant une première plaque (23) et une deuxième plaque (27) parallèle à la première, les deux plaques (23, 27) étant disposées verticalement; le premier de ces éléments transversaux (20, 21, 22) étant constitué par un premier tube en forme d'U (22) qui est coudé en s'éloignant du plan dans lequel il se trouve de manière à prendre une forme anatomique et définir le profil de la portion de dossier (4) du siège (1), ce premier tube (22) solidarisant ensemble les extrémités supérieures respectives (47) de chacune des deuxièmes plaques (27) des éléments longitudinaux latéraux (19), le deuxième élément transversal étant constitué par un deuxième tube en forme d'U (20), qui est coudé en s'éloignant du plan dans lequel il se trouve de manière à prendre une forme anatomique et définir le profil avant de la portion d'assise (5) du siège (1), ce deuxième tube (20) solidarisant ensemble les extrémités avant respectives (32) de chacune des premières plaques (23), et le troisième élément transversal étant constitué par un tube rectiligne (21) qui solidarise ensemble les extrémités supérieures respectives (25) des premières plaques (23), ce siège (1) étant caractérisé en ce que chaque élément longitudinal (19) comprend, en combinaison avec la première et la deuxième plaque (23, 27) et avec les trois éléments transversaux (20, 21, 22) une troisième plaque (24) parallèle à la première, montée avec une première extrémité (26) sur l'extrémité supérieure (25) de la première plaque (23) et ayant une deuxième extrémité (29), à savoir cette extrémité éloignée de la première extrémité (26) reliée à une extrémité inférieure respective de la deuxième plaque (27), cette première plaque étant équipée vers le bas de guides (10) qui coopèrent à coulissement avec un rail (9) disposé pour être fixé sur le plancher (6) du véhicule.

2. Siège selon la revendication 1, caractérisé en ce que le profil de la portion d'assise (5) est défini par le deuxième tube en forme d'U et par un élément horizontal plan (58) sous la forme d'un tissu élastiquement déformable tendu entre le deuxième tube en forme d'U (20) et le tube rectiligne (21) et relié aux deux tubes au moyen d'une multiplicité de crochets (55, 56, 57).

3. Siège selon l'une des revendications 1 ou 2, caractérisé en ce que l'extrémité inférieure (28) de la deuxième plaque (27) est reliée à une deuxième extrémité (29) de la troisième plaque (24) de façon à pouvoir tourner au moyen d'une premier élément de manchon (30) solidaire de la première plaque (27) et perpendiculaire à elle, et montée librement et coaxialement sur un deuxième élément de manchon (31) solidaire de la troisième plaque (24) et perpendiculaire à celle-ci.

4. Siège selon l'une des revendications précédentes, caractérisé en ce que la première extrémité (26) de la troisième plaque (24) et l'extrémité supérieure (25) de la première plaque (23) sont reliées ensemble par deux éléments de fixation qui sont éloignés d'une distance prédéterminée, un premier élément de fixation étant disposé sur le côté faisant face à l'extrémité avant (32) de la première plaque (23) et étant constitué par un élément de liaison (33) disposé pour permettre à cette troisième plaque (24) de tourner autour de lui parallèlement à la première plaque (23) et le deuxième élément de fixation étant constitué par des moyens (34, 37, 38) pour empêcher la troisième plaque (24) de pivoter autour du premier élément de fixation.

5. Siège selon l'une quelconque des revendications précédentes, caractérisé en ce que les troisièmes plaques (24) sont reliées ensemble par une barre d'accouplement (59) parallèle au tube rectiligne (21).

6. Siège selon l'une quelconque des revendications 3 à 5, caractérisé par un dispositif (60) pour régler la position angulaire de la portion de dossier (4) par rapport à la portion d'assise (5), ce dispositif de réglage (60) comprenant deux dispositifs d'actionnement (61) contenus chacun dans le premier et dans le deuxième élément de manchon (30, 31) de chacune des troisième et deuxième plaques (24, 27) et pouvant être commandés par l'utilisateur au moyen d'organes de commande.

7. Siège selon la revendication 6, caractérisé en ce que les deuxièmes éléments de manchon (31) solidaires des troisièmes plaques (24), supportent les extrémités opposées (63) d'une barre d'accouplement (59) parallèle au tube rectiligne (21) et coaxiale aux éléments (31), chaque extrémité (63) comprenant une portion filetée (64), chaque dispositif d'actionnement (61) comprenant un élément d'actionnement (65) disposé pour coopérer avec l'une de ces portions filetées (64) de façon à être entraîné en translation parallèle à son axe par la rotation de cette barre d'accouplement (59), des moyens de guidage (66) solidarisant l'élément d'actionnement (65) du deuxième élément de manchon (31) et des moyens (67), solidaires du premier élément de manchon (30) étant disposés pour coopérer avec des surfaces hélicoïdales (68) de l'élément d'actionnement (65) afin de recevoir de ces surfaces une poussée qui fait tourner le premier élément de manchon (30) sur le deuxième (31).

8. Siège selon la revendication 7, et la revendication 6, caractérisé en ce que ces moyens de commande comprennent un moteur électrique pour faire tourner la barre d'accouplement (59).

9. Siège selon l'une quelconque des revendications 4 à 8, caractérisé en ce que les moyens pour empêcher le pivotement de la troisième plaque (24) par rapport à la première (23) autour du premier élément de fixation (33) comprennent un boulon (34) parallèle au tube rectiligne (21) et pénétrant dans des alésages coaxiaux (35) de la première et de la troisième plaque (23, 24).

10. Siège selon l'une des revendications 4 à 8, caractérisé en ce que les moyens pour empêcher le pivotement de la troisième plaque (24) par rapport à la première (23) autour du premier moyen de fixation (33) comportent une broche (37) parallèle au tube rectiligne (21) et solidaire de l'extrémité supérieure (25) d'au moins l'une des premières plaques (23), et un crochet (38) solidaire de la troisième plaque respective (24) et disposé pour coopérer avec cette broche (37) et pouvant être déplacé au moyen d'un bouton-poussoir (39) contre l'action d'un ressort (40) afin de libérer la broche (38), des moyens élastiques (41) étant portés par les troisièmes plaques (24) et étant disposés pour coopérer avec cette broche (37) afin de faire pivoter la troisième plaque (24) autour du premier moyen de fixation (33) de manière à rabattre la portion de dossier (4) contre la portion d'assise (5).

11. Siège selon l'une quelconque des revendications précédentes, caractérisé en ce que le tube rectiligne (21) est supporté à chaque extrémité (52) par une plaque (53, 79) solidaire de l'extrémité supérieure (25) de la première plaque (23) de chacun des éléments longitudinaux latéraux (19).

12. Siège selon la revendication 11, caractérisé en ce que la plaque (79) comprend une première extrémité (80) articulée sur la première plaque (23) de telle manière que la plaque (79) peut pivoter parallèlement à cette dernière, et une deuxième extrémité (81), à savoir celle opposée à la première (80), articulée sur une tige pratiquement verticale (82) d'un dispositif (83) pour régler la hauteur de la portion d'assise (5) du siège (1), ce dispositif (83) comprenant en outre un moteur électrique qui peut être commandé par l'utilisateur et qui est disposé pour entraîner, au moyen d'un câble flexible (84), un réducteur (85) supporté par la plaque (23) et équipé d'un moyen de transmission (86) disposé pour coopérer avec cette tige (82) afin de la déplacer parallèlement à son axe, la tige (82) étant supportée par la première plaque (23).

13. Siège selon l'une quelconque des revendications précédentes, caractérisé en ce que les rails (9) dans lesquels coulissent les guides (10) et qui sont chacun portés par l'une des premières plaques (23) sont agencés pour reposer sur des ferrures supports (7, 8) solidaires du plancher (6) du véhicule, l'une des rails (9) étant pourvu d'au moins un premier appendice latéral (12) agencé pour coopérer par introduction dans un logement (13) prévu sur l'une (7) de ces ferrures afin de retenir ce siège (1) sur le plancher (6), l'autre rail (9) étant pourvu d'au moins un deuxième appendice latéral (14), qui est opposé au premier (12) et qui est disposé pour coopérer avec l'autre ferrure (8) au moyen d'un élément de liaison amovible (15) agencé pour empêcher le premier appendice (12) de sortir de son logement (13) et pour fixer sur le plancher (6) le rail (8) pourvu du deuxième appendice (14).

14. Siège selon la revendication 13, caractérisé en ce que l'un des rails (9) présente un élément d'attache (18) pour une ceinture de sécurité pour le siège (1), cet élément d'attache (18) étant fixé dans une position correspondant au premier appendice (12).

15. Siège selon l'une quelconque des revendications précédentes, caractérisé en ce que l'une des premières plaques (23) est équipée d'un levier latéral (70) qui peut être commandé par l'utilisateur et qui peut pivoter contre l'action de moyens élastiques (71) et qui est pourvu à son extrémité inférieure (72) de moyens de coopération (73, 75) agencés pour coopérer avec une multiplicité de fentes (74) formées à un pas constant déterminé dans le rail respectif (9) dans lequel les guides (10) portés par la première plaque (23) coulissent, afin d'arrêter le coulissement des guides (10) dans les rails respectifs (9) en une multiplicité de positions prédeterminées.

16. Siège selon la revendication 15, caractérisé en ce que les moyens de coopération (75) comportent une vis (76) supportée à rotation par l'extrémité inférieure (72) du levier (70), et un pignon réducteur (77) pour faire tourner la vis (76), logé à l'intérieur de celle-ci et agencé pour recevoir un mouvement, an moyen d'un câble flexible (78), d'un moteur électrique qui peut être commandé par l'utilisateur, cette vis (76) étant agencée pour coopérer avec les fentes (74) afin de faire coulisser ces guides (10) dans les rails (9) du fait de la rotation de la vis (76).

17. Siège selon l'une quelconque des revendications précédentes, caractérisé en ce que la première (23), la troisième (24) et la deuxième (27) plaque sont en matière plastique et sont équipées de nervures de raidissement (69), le premier (22) et le deuxième (20) tube en forme d'U étant métalliques et étant fixés sur la deuxième (27) et sur la première (23) plaque de chacun des éléments longitudinaux (19) par des éléments métalliques de serrage (45, 50) montés sur la première et sur la deuxième plaque (23, 27) au moyen de vis (47, 51) et agencés pour verrouiller les extrémités respectives (49, 44) du premier (22) et du deuxième (20) tube en forme d'U dans des logements respectifs (48, 43) ménagés dans la première (23) et dans la deuxième (27) plaque.

Fig.2

Fig.3

Fig.1

Fig.4

Fig.5

Fig.6

0 116 278

Fig.8

Fig.7

Fig.10

Fig.9

3

Fig.12

Fig.13

Fig.11

Fig.14

Fig.15

0 116 278